# EUROPEAN PATENT APPLICATION

(11) **EP 0 865 911 A1**
(43) Date of publication of application: **23.09.1998**
(21) Application number: 98104779.8
(22) Date of filing: 17.03.1998
(51) Int. Cl.: B32B 27/32, C08K 5/00, C08J 5/18, B32B 27/18

(54) **Polymeric films**

(30) Priority: 18.03.1997 GB 9705510
(71) Applicant: Hoechst Trespaphan GmbH, 66539 Neunkirchen (DE)
(72) Inventor: Davidson, Paul Malcolm Mackenzie, Elcombe, Swindon SN4 0NW (GB); Biddiscombe, Helen Ann, North Petherton, Bridgwater TA6 6SN (GB); Govier, Rebecca Karen, Abbey Meads, Swindon SN2 3YB (GB); Ott, Marc Fritz Manfred, Wootton Bassett, Swindon SN4 8LJ (GB)
(74) Representative: Luderschmidt, Schüler & Partner GbR

(57) **Abstract**

A polyolefin film having a base layer of a polypropylene-based resin including microvoids formed by stretching a polypropylene-based resin containing the beta-form of polypropylene, and a heat seal layer on the base layer. When such films are heat sealed, the heat seal area becomes transparent, thereby providing an indication of seal integrity.

## Description

This invention concerns polyolefin films produced from polypropylene and to methods of making and using such films.

The beta-form of polypropylene is relatively unstable compare with the corresponding alpha-form under the conditions usually used to produce polypropylene films. Thus when melts of polypropylene are extruded and then cooled to form a polymeric film, which may then subsequently be stretched, the alpha-form of polypropylene tends to predominate. However, it is known to produce films using polypropylene containing high concentrations of the beta-form of polypropylene by mixing polypropylene containing a high proportion of the alpha-form with a suitable nucleating agent which induces the formation of high concentrations of the beta-form when it is molten and subsequently cooled.

One example of such a process is described in U.S. Patent No. 4,386,129 in which a variety of so-called beta-nucleators are dispersed in polypropylene following which films are produced therefrom by melting and subsequent cooling, the crystallinity of the resulting cast films being controlled by appropriate adjustment of the cooling conditions. Selective extraction of the beta-form of the polypropylene from the films leaving a matrix of the alpha-form is then used to impart porosity to the films.

U.S. Patent No. 5,231,126 describes the use of two component mixtures of beta-nucleating agents to produce microporous films by mono- or biaxial stretching cast polypropylene webs containing a high concentration of the beta-form of polypropylene resulting from the use of the mixture of nucleating agents. It is believed that the porosity results from voids induced by the change of the beta-form into the alpha-form during the stretching process, the alpha-form having a higher density than the beta-form from which it is derived. The development of porosity during the stretching process is accompanied by a significant reduction in apparent film density and the films become opaque with a high degree of whiteness.

More recently it has been proposed in EP 0632095 to use a variety of organic amides as beta-nucleating agents in the formation of mono- and biaxially stretched polypropylene films. Here, a melt of a mixture of polypropylene and the nucleating agent being cast into a film web which is allowed to crystallize at a temperature of 15 to 140°C to form a solid web containing the beta-form of polypropylene, following which the web is mono- or biaxially stretched at a temperature above 20°C but less than the melting point of the beta-form crystals in the web. The resulting stretched films are said to have high whiteness and hiding power combined with printability and writeability.

Microvoid formation during the plastic deformation of the beta-form of polypropylene is also described in the journal POLYMER (Vol. 35, No. 16, pp. 3443-5, 1995; and Vol. 36, No. 13, pp. 2523-30, 1995). Porosity is said to increase with higher crystallization and lower stretching temperatures. All samples containing the beta-form apparently becoming opaque when stretched at temperatures below 120-130°C.

Opacity due to microvoid formation also occurs when propylene homopolymers are blended with a variety of incompatible particulate materials and then biaxially stretched, numerous examples of this being known from the prior art. Typically, phase distinct organic or inorganic materials with a particle size of 1 to 10 µm are used for the purpose.

It is an object of the present invention to provide polypropylene films having useful characteristics, such as heat-sealability, and to provide methods of forming such films.

In accordance with these objectives, there is provided in accordance with the present invention a polyolefin film including a base layer of a polypropylene-based resin including microvoids formed by stretching a polypropylene-based resin containing the beta-form of polypropylene, and a heat seal layer on the base layer.

In accordance with these objectives, there is also provided in accordance with the present invention a method of making a polyolefin film as described above, including:
(a) forming by coextrusion a film of
   (i) a base layer of containing the beta-form of polypropylene
   (ii) the heat-seal layer;
(b) biaxially stretching the film to form voiding in the base layer.

In accordance with these objectives, there is also provided in accordance with the present invention, a film including an opaque layer of a propylene resin and a heat-sealable layer, wherein the opaque layer does not include any void-forming incompatible particles or opacifying pigments.

Further objects, features, and advantages of the present invention will become apparent from the detailed description of preferred embodiments that follows.

According to the present invention there is provided a polyolefin film comprising a base layer of a polypropylene-based resin including microvoids, the microvoids formed by stretching a polypropylene-based resin containing the beta-form of polypropylene, and a heat seal layer on the base layer.

"Polypropylene-based resin" or "polypropylene-based polymer" and "polypropylene" are used synonymously. These terms shall mean polymers containing at least 50 % by weight, based on the weight of the polymer, of propylene units.

"Web" shall mean a sheet like extrudate resulting from extruding the respective polymer melt or melts through a slot die and subsequent cooling of the melt to form the unoriented film.

"Base layer" shall mean either "the layer" in case of a monolayered film or the thickest layer, generally being the innermost or central layer of the multilayer structure.

"Beta form of polypropylene" shall mean that crystalline modification of polypropylene which has a lower melting point and a lower density than the common alpha form of propylene.

"Microvoids" shall mean hollow vacuoles in the polymer matrix reducing the density of the oriented polypropylene film wherein the reduced density is lower than that of a corresponding film without any voids.

Films in accordance with the present invention will in general be heat sealable as a result of the presence of the heat seal layer, and they also have the advantage that when they are heat sealed the heat seal region can become optically clear compared with the rest of the film, thereby indicating whether the heat seal is properly formed. This is unlike heat sealable films which have been voided with particulates, as the latter in general retain their opacity in the heat seal areas after heat sealing.

In the present invention, the polypropylene-based resin or polypropylene based polymer can be any resin or polymer containing propylene units, generally at least 50% by weight of propylene units, preferably 80-100% by weight of propylene, for example 95-100% by weight of propylene, in each case based on the total polymer weight. The polypropylene-based polymer is preferably a propylene homopolymer or a random or block copolymer or terpolymer containing a major proportion (80-100wt%) of units derived from propylene, the remainder being ethylene or butylene and having a crystallinity of at least 40%, preferably 50 to 90%. Usually the polypropylene based polymer has a melting point of 140-170° C, preferably 155-165°C and a melt flow index (DIN 53 735 at 21,6 N and 230°C) of 1.0 - 10 g/10min, preferably 1.5-6.5 g/10min. Most preferred is isotactic propylene homopolymer containing about 100% propylene units and having a melting point of 160-162°C.

The nucleating agent used to induce the formation of the beta-form of the polypropylene of the base layer can be selected from those proposed hitherto for the purpose. Any desired nucleating agent or combination of agents can be used. However, particularly good results have been achieved using amides as proposed in E.P-A-0632095, hereby incorporated by reference in its entirety, and more particularly N, N'-dicyclohexyl-2,6-naphthalene dicarboxamide.

The amount of nucleating agent used to induce the formation of the beta-form of polypropylene can be varied to give the desired results, for example from 0.0001 to 5wt%, preferably from 0,001 to 2wt% of the nucleating agent based on the weight of polypropylene, as described in E.P. 0632095, preferred amounts being from 0.01 to 1wt%. The polypropylene should have sufficient amounts of the beta-form such that the desired amount of microvoids are formed when the film is stretched.

The heat seal layer forms an outer surface of films of the present invention, and it can be in direct contact with the voided polypropylene base layer or it can be an outer layer on one or more intermediate layers on the base layer. Any heat-sealable layer can be used. The heat seal layer and any other layers which may be present are preferably formed from a polyolefin. Examples of polymers which can be used for the purpose include polymers containing units derived from one or more of ethylene propylene, butene-1, and higher aliphatic alpha-olefins, and blends thereof. Other polymeric materials which can be used for these layers include, for example, acrylic polymers, and polyolefins extended or reacted with unsaturated carboxylic acids and derivatives thereof, *e.g*., acid ionomers and anhydrides.

Specifically useful as heat sealable polymers are copolymers of ethylene and propylene or ethylene and butylene or propylene and butylene or copolymers of propylene and another alpha olefin having 5 to 10 carbon atoms. Specifically useful as heat sealable polymers are also terpolymers of ethylene and propylene and butylene. Amongst those copolymers of ethylene and propylene with an ethylene content of 2 to 10 wt.% or copolymers of propylene and butylene with an butylene content of 5 to 40wt. % or terpolymers of ethylene and propylene and butylene with about 1 to 10 wt. % of ethylene and 3 to 20 wt.% of butylene the remainder being propylene, are preferred.

Generally the above described copolymers and terpolymers have a melt flow index of from 1,5 to 30 g/10min, preferably 3 to 15 g/10min (at 230°C and a force at 21.6 N DIN 53 735) and a melting point in the range of 110 to 145°C, preferably 120 to 140°C (DSC).

Although one surface of the voided base layer of films of the present invention will have a heat sealable layer thereon (optionally with an intermediate layer therebetween), the other surface of the base layer need not have any further layers thereon. This can be used, for example, to exploit the often inherent printability of the base layer whilst providing films which are heat sealable. However, this other surface of the base layer can have one or more polymeric layers thereon, for example a further heat sealable layer which can be the same as or different from the heat seal layer on the other side of the base layer. Preferred materials for this further heat seal layer can be selected from heat seal materials which can be used for the heat seal layer on the other side of the voided polypropylene-based layer.

Films in accordance with the present invention can include one or more additives used in the polyolefin art, for example slip agents, antistatic agents, antiblock agents, neutralizing agent, stabilizers, or UV absorbers or pigments, such additives preferably being present in amounts which do not significantly adversely affect the ability of polypropylene to crystallize in its beta-form. When additives are present, they can be in one or more of the layers of which the film is constructed. When a pigment is used, it is preferably present in an amount which does not substantially mask the change in opacity which results when the film are heat sealed. The additive can be used alone or in combination and are present in amount to give the desired results, *e.g*., effective antistatic properties.

In accordance with the invention, no external additives, such as calcium carbonate or other void-initiating particles like polyethylene terephtalate (PET) or titanium dioxide or other white pigments are needed to give an opaque film. External additives are additives other than polypropylene and being incompatible with polypropylene and causing formation of voids upon stretching.

Films in accordance with the present invention can be produced using known methods, for example, by coextrusion through a slot die of melts of polymers of the two specified layers, or outers which may be desired, for example intermediate layers, to form a polymer web which is cooled and thereafter sequentially biaxially stretched. Also, the heat seal layer or layers can be applied to the voided layer by coating after the voided layer has been formed.

It will generally be important to form the beta-form of the polypropylene-based resin in the base layer before the film is stretched to effect voiding. This can be carried out by allowing a melt of the polypropylene-based resin and a beta-form nucleating agent to crystallize under conditions which bring about the formation of the beta-form of the resin. The cooling or crystallization temperature used to induce the formation of the beta-form of the polypropylene resin of the base layer prior to stretching should generally be at least 20°C but less than the melting point of the beta-form of polypropylene. Although temperatures at the lower end of this range, for example up to 50°C, can be used, it is generally preferred to use temperatures of at least 70°C, and higher temperatures still are often preferred, for example 90°C or more. However, the cooling temperature is generally not more than 140°C, preferably not more than 130°Cand from practical considerations it is preferably below the temperature at which the film sticks to surfaces used to cool it.

Cooling of the melt can be effected in air of a suitable temperature, but it is generally preferred to effect cooling by contacting the extruded web with a cooling surface, for example, a chill roll or by immersing the extruded melt into a cooling liquid

Subsequent biaxial stretching of the cooled web can be effected under conditions known in the polypropylene film art. The stretching is preferably effected sequentially, this enabling the conditions used in the two directions to be selected independently of each other. Stretching in die direction of extrusion (the machine direction) will usually be effected before stretching in the transverse direction.

The conditions used to effect stretching in the machine direction have been found to have a substantial effect on microvoid formation, lower stretch temperatures and lower stretch ratios usually leading to increased voiding. A preferred temperature range for stretching in the machine direction is from 70 to 110°C, and more preferably from 80 to 95°C, and the stretch ratio used in the machine direction will usually be at least 3:1, a preferred range being from 3.5:1 to 8:1.

Subsequent stretching of the films in the transverse direction will in general be effected at lower temperatures than are conventionally used for the transverse stretching of polypropylene films, for example, at from 100 to 160°C. However, it is generally preferred to effect stretching in the transverse direction at temperatures of 110 to not more than 155°C and preferably not more than 150°C in order to produce biaxially stretched films having low densities. The stretch ratio used in the transverse direction is generally from 3:1 to 10:1, preferably 5:1 to 10:1.

The heat seal layer of films in accordance with the present invention may have any desired thickness and are preferably from 0.2 to 2.0µm thick, and more preferably from 0.8 to 1.5µm thick. Films in accordance with the present invention can in general be made to thicknesses used hitherto for heat sealable voided polypropylene films. Preferably the film's overall thickness is between about 30 to 200, preferably 50 to 150µm

Either or both outer surfaces of films in accordance with the present invention are preferably treated to increase their surface energy, for example using flame and corona discharge treatment.

The following Examples are given by way of illustration only; and do not limit the scope of the invention.

### Example 1

A two layer polymer web was produced by coextruding through a slot die a base layer of propylene homopolymer containing 0.1 wt% of a beta-form nucleating agent (N,N'-dicyclo-hexyl-2,6-naphthalene dicarboxamide; NJ-Star NU-100, ex New Japan Chemical Co., Ltd.), and a single layer of a propylene/ethylene copolymer (4 wt% ethylene). The homopolymer layer was cooled by bringing it into contact with a chill roll having a surface temperature of 100°C, and the copolymer layer was cooled in the ambient air.

DSC measurements indicated the homopolymer layer contained a high level of the beta-form of polypropylene with Tₘ of 153°C.

The cooled web was then stretched 4.5 times in the direction of extrusion by contacting them with heated rolls at 90°C and having different peripheral speeds to produce opaque mono-axially stretched web. DSC showed that virtually all of the beta-form of polypropylene formed during the cooling step had been converted into the alpha-form.

The mono-axially stretched web was then stretched 8.0:1 in the transverse direction using a stenter oven at 144°C to produce biaxially stretched films with the density shown in Table 1. The thickness of the film produced is also shown in Table 1, the single heat seal layer being 1µm thick.

The copolymer layer had a heat seal threshold of 122°C, and an impulse heat seal formed between the copolymer layers was clear.

### Example 2 (Comparison)

A single layer biaxially stretched and voided polypropylene film was produced in a similar manner to and under the conditions described in Example 1 except that the copolymer layer was omitted. This film did not form a heat seal to itself under the conditions used to form the heat seal described in Example 1.

### Example 3 (Comparison)

A three layer polymer web was produced by coextruding a core layer of the propylene homopolymer used in Example 1 and 2 but containing chalk (mean particle size 3µm) as a voiding agent, with two outer layers of the copolyrner used in Example 1. The extruded web was cooled using a chill roller having a surface temperature of 20°C, and it was then stretched 4.5:1 in the machine direction using rolls heated at 110°C before being stretched 8:1 in the transverse direction in a stenter oven at a temperature of 160°C. The web could not be stretched in the transverse direction at the temperature used in Examples 1 and 2.

This film, which had heat seal layers which were both 1µm thick and had a heat seal threshold of 122°C, heat sealed to itself but the resulting heat seals were opaque.

**Table 1**

| Example | Heat seal layer (yes/no) | TD Stretch Temp.(°C) | Total Thickness (µm) | Film Density (g/cm³) | Heat Seal Threshold (°C)/type |
|---|---|---|---|---|---|
| 1 | yes | 144 | 54.0 | 0.59 | 122/clear |
| 2 | no | 144 | 45.0 | 0.65 | -/no seal |
| 3 | yes | 160 | 50.0 | 0.75 | 122/opaque |

Great Britain Application 9705510.7 filed March 18, 1997 (the priority document of the present application) is hereby incorporated by reference in its entirety.

While several embodiments of the invention have been described, it will be understood that it is capable of further modifications, and this application is intended to cover any variations, uses, or adaptations of the invention, following in general the principles of the invention and including such departures from the present disclosure as to come within knowledge or customary practice in the art to which the invention certains. 5 The film is for example useful as a packaging film

## Claims

1. A polyolefin film comprising a base layer of a polypropylene-based resin including microvoids formed by stretching a polypropylene-based resin containing the beta-form of polypropylene, and a heat seal layer on the base layer.

2. A polyolefin film according to claim 1, wherein the heat seal layer comprises (i) a polyrner containing units from at least two of ethylene, propylene, butene-1, or a higher alpha-olefin; (ii) a polyolefin extended with an unsaturated carboxylic acid or a salt or anhydride thereof; or (iii) an acrylic polymer.

3. A polyolefin film according to claim 1, wherein the surface of the base layer opposite the heat seal layer has a further polymeric layer thereon.

4. A polyolefin film according to claim 3, wherein the further polymeric layer is a heat seal layer that comprises a polymer containing units from at least two of ethylene, propylene, butene-1, or a higher alpha-olefin; (ii) a polyolefin extended with an unsaturated carboxylic acid or a salt or anhydride thereof; or (iii) an acrylic polymer.

5. A polyolefin film according to claim 1, having an intermediate layer between the heat seal layer and the base layer.

6. A polyolefin film according to claim 1, wherein each layer thereof is substantially non-pigmented.

7. A polyolefin film according to claim 1, wherein the film is biaxially stretched.

8. A polyolefin film according to claim 1, wherein formation of the beta-form of polypropylene used to form the voided base layer is induced using a nucleating agent.

9. A polyolefin film according to claim 8, wherein the nucleating agent comprises N,N'-dicyclohexyl-2,6-naphtalene dicarboxamide.

10. A polyolefin film according to claim 1, which has been subjected to a surface treatment to increase its surface energy.

11. A polyolefin film according to claim 1, wherein the layers thereof have been produced by coextrusion.

12. A polyolefin film according to claim 1, wherein the heat seal layer has been applied to the base layer or to an intermediate layer on the base layer by coating.

13. A polyolefin film according 10 claim 1, which comprises one or more of a slip agent, an antistatic agent, an antiblock agent, a stabilizer, or a UV absorber.

14. A polyolefin film according to claim 1, wherein when the films are heat-sealed, the area heat-sealed becomes optically clear compared with the base layer.

15. A method of making a polyolefin film is claimed in claim 1, comprising:
(a) forming by coextrusion a film comprising (i) a base layer containing the beta-form of polypropylene and (ii) the heat-seal layer, and
(b) biaxially stretching the film to form voiding in the base layer.

16. A method according to claim 15, wherein the beta-form of polypropylene is induced by use of a nucleating agent.

17. A film comprising an opaque layer of a propylene resin and a heat-sealable layer, wherein the opaque layer does not include any void-forming particles or opacifying pigments.
